# EUROPEAN PATENT APPLICATION

(11) **EP 0 730 392 A2**
(43) Date of publication of application: **04.09.1996**
(21) Application number: 96301334.7
(22) Date of filing: 27.02.1996
(51) Int. Cl.: H05B 33/08

(54) **Power supply circuit for an EL panel**

(30) Priority: 28.02.1995 JP 40294/95
(71) Applicant: SGS-THOMSON MICROELECTRONICS K.K., Minato-ku, Tokyo 108 (JP)
(72) Inventor: Mihara, Masaaki, Cyuo-ku, Chiba-shi, Chiba (JP)
(74) Representative: Palmer, Roger

(57) **Abstract**

A power supply circuit is equipped with a driving pulse generation circuit (4) that generates a driving pulse of a specified frequency, a single drive circuit (3) that is controlled by this driving pulse, and an autotransformer (2), where a center tap is connected to a source voltage (Vcc), and forms a resonant circuit by using autotransformer (2) and a capacitive load (1), which is connected thereto. Alternatively, instead of driving pulse generation circuit (4), it is made of a differential amplifier (10) and a positive feedback circuit (12) that performs positive feedback from one of the terminals of autotransformer (2) to the input terminal of differential amplifier (10).

In this manner, by driving the autotransformer using the single drive circuit, the entire autotransformer can be utilized in an efficient manner and a smaller and cheaper power supply circuit can be realized.

## Description

The present invention pertains to a power supply circuit, in particular, to a power supply circuit for driving the capacitive loads of electroluminiscent panels and the like used in flat panel displays.

The wristwatch is an example of an application, in which, as described above, an electroluminiscent panel is used in a flat panel display. However, because the electroluminiscent panel is driven by a battery in a wristwatch, although a DC voltage is converted to an alternating voltage and applied to the electroluminiscent panel, from the standpoint of electroluminiscence it is necessary to make the frequency of this alternating voltage several hundred hertz and its peak-to-peak value several hundred volts,

Circuits that make use of the charging and discharging of a capacitor and circuits that make use of inductors have been suggested in the past as power supply circuits for generating, as described above, alternating voltages of several hundred volts from direct-current power supplies of several tens of volts. Examples are described in U.S. Patent Nos. 4,208,869, 4,775,964, and 4,527,096.

Because conventional power supply circuits used for electroluminiscent panels, which were based on the charging and discharging of capacitors, and power supply circuits used for electroluminiscent panels, which made use of inductors, generated rectangular waves, they had the disadvantage in that the luminous efficiency of electroluminiscent panels was low, and, along with that, a lot of noise was generated.

In order to correct this disadvantage, power supply circuits for electroluminiscent panels that employed transformers have been developed as well. This power supply circuit that was based on employing a transformer had the advantages that the generation of noise was insignificant and, along with that, its luminous efficiency was higher, because an alternating voltage with a rectangular waveform was applied to the electroluminiscent panel because the electroluminiscent panel, which was a capacitive load, formed a resonant circuit. However, because the transformer, which had a primary winding and a secondary winding, became large, the size of the entire power supply circuit became large, and, for example, it became difficult to fit it inside the housing of a wristwatch. Furthermore, this had the disadvantage that the cost of the entire power supply circuit increased, because the cost of the transformer was high. Also, in order to cause a relatively large electroluminiscent panel to emit light, it was necessary to make the capacitance of the transformer larger, which made it larger and heavier. Therefore, power supply circuits for electroluminiscent panels of the type that used transformers were only employed in large display panels, and could not be employed in small-size applications, such as wristwatches.

The purpose of the present invention is to offer a power supply circuit that eliminates the disadvantages of the above-described conventional capacitor type, inductor type and transformer type circuits , can cause electroluminiscent panels to emit light with high efficiency without generating noise and, moreover, is lightweight, small in size and also inexpensive.

The power supply circuit based on the present invention is characterized in that it has a power supply terminal that is connected to a direct-current power supply; an autotransformer that has a first and second terminal as well as a center tap positioned between these first and second terminals, with the center tap connected to the above-mentioned power supply terminal and a capacitive load connected between the first and second terminals; a driving pulse generation circuit that generates a driving pulse with a frequency that is equal to the resonant frequency determined by the capacitance of the above-mentioned capacitive load and the inductance of the autotransformer; and a single drive circuit having a switching element, whose output terminal is connected to the first or second terminal of the above-mentioned autotransformer and which alternately performs the on/off operation based on the driving pulse supplied from the above-mentioned driving pulse generation circuit.

An autotransformer, which is also called a single-winding transformer, is used in such a power supply circuit based on the present invention, and, as compared to the ordinary transformer, which has a secondary winding, its manufacture is extremely simple, it can be made much cheaper, and, in addition, it can be made smaller in size. Therefore, in comparison with conventional power supply circuits using transformers, it can be made smaller and lighter, and in addition, it can be made cheaper. Furthermore, because the resonant circuit is made up of an autotransformer and a capacitive load, the waveform of the output voltage that drives the load becomes sinusoidal, and the generation of noise is reduced, and luminous efficiency can be improved, in particular, when an electroluminiscent panel is used as a load.

A single drive circuit is used as the driving circuit of the autotransformer in the present invention. This single drive circuit has a switching element that is alternately brought in an off state or an on state, and a driving current is supplied by means of this switching element from a direct-current power supply to a portion of the coil section of the autotransformer, for example, to a portion of the coil, whose number of turns is around 5% of the number of turns of the entire autotransformer. Then, a ringing current is generated in the resonant circuit of the autotransformer and electroluminiscent panel and an alternating voltage is applied to the electroluminiscent panel. If at this moment the frequency of the driving current supplied to the autotransformer is set to be equal to the resonant frequency determined by the inductance of the autotransformer and the capacitance of the electroluminiscent panel, then electric power can be efficiently supplied to the electroluminiscent panel and the luminous efficiency of the electroluminiscent panel becomes extremely good. In this manner, because the entire coil is efficiently utilized in each driving period by driving the autotransformer using a single drive circuit, the number of turns in the autotransformer can be decreased, the autotransformer becomes smaller and, in addition, cheaper. For example, because only half of the coil is used in each driving period in the case in which the autotransformer is driven using a push-pull driving circuit, the number of turns in the autotransformer can be cut approximately in half as compared with the case in which a push-pull driving circuit is used.

The ratio of the number of turns between the first terminal and the center tap to the number of turns between the second terminal and the center tap of the autotransformer can be determined based on the voltage of the DC voltage source, the voltage of the alternating voltage output, the necessary luminance of the electroluminiscent panel, and the like. The voltage that is applied to the electroluminiscent panel can be adjusted based on the duty factor of the driving pulse that drives the single drive circuit, and for this reason, the luminance of the electroluminiscent panel can be easily adjusted based on a duty factor adjustment means in the driving pulse generation circuit.

A self-excitation power supply circuit can be used as the power supply circuit based on the present invention. A self-excitation power supply circuit is characterized in that it is equipped with a power supply terminal that is connected to a direct-current power supply; a differential amplifier that has a first and second input terminal, as well as an output terminal; a means for applying a reference potential to the second input terminal of this differential amplifier; a single drive circuit having a switching element that is driven by the output signal of the above-mentioned differential amplifier and alternately performs the on/off operation; an autotransformer that has a first and second terminals, as well as a center tap placed between these first and second terminal, with the center tap connected to the above-mentioned direct-current power supply, the first terminal connected to the output terminal of the above-mentioned single drive circuit and a capacitive load connected between the first and second terminals; and a positive feedback circuit that links the second terminal of this autotransformer to the first input terminal of the above-mentioned differential amplifier.

The capacitance of the electroluminiscent panel changes and decreases with time, but in this case the resonant frequency of the resonant circuit increases, and for this reason, when self-excitation power supply circuits are used, even if some changes take place in the panel with time, luminance does not change and can be kept practically unchanged.

An application example of a self-excitation power supply circuit is characterized in that a duty factor conversion circuit, which automatically changes the duty factor of the driving signal for the above-mentioned single drive circuit in accordance with the resonant frequency determined by the inductor of the above-mentioned autotransformer and the capacitance of the capacitive load, is connected between the above-mentioned differential amplifier and the single drive circuit. If such a construction is used, then even if the capacitance of the load varies, energy appropriate for a given load can be supplied in accordance with the state of the load. In other words, in the case in which an electroluminiscent panel is used as a load, as the electroluminiscent panel deteriorates with time, its capacitance decreases and the resonant frequency determined by the capacitance of the load and the inductance of the autotransformer increases; however, because the pulse width of the driving pulse used for the single drive circuit is kept unchanged at all times, the duty factor of the driving signal becomes higher to the same extent, and as a result, in terms of luminance, the deterioration of the electroluminiscent panel with time can be automatically compensated. By using such a construction, appropriate energy can be automatically supplied in accordance with the state of the load without detecting changes in the state of the load.

The power supply circuit based on the present invention is characterized in that it has a power supply terminal that is connected to a direct-current power supply; a coil that has a first and second terminal, with the first terminal connected to the above-mentioned power supply terminal and an electroluminiscent panel connected between the first and second terminals; a driving pulse generation circuit that generates a driving pulse with a frequency that is equal to the resonant frequency determined by the capacitance of the electroluminiscent panel and the inductance of the coil; and a single drive circuit having a switching element that alternately performs the on/off operation based on the driving pulse supplied from the above-mentioned driving pulse generation circuit after output terminal is connected to the second terminal.

In the present invention a coil is used as a driving element that drives the electroluminiscent panel, and this coil is connected between the power supply terminal and the single drive circuit. The single drive circuit is in the on state when the driving pulse is supplied from the driving pulse generation circuit, and while it is on, energy is supplied to the coil from the power supply terminal. Then, when the driving pulse ends, the single drive circuit is turned off, and, by using the energy stored in the coil, a sinusoidal voltage is applied to the electroluminiscent panel, and the electroluminiscent panel starts a generation operation. Although the generated luminance of the electroluminiscent panel is mainly determined by the frequency and voltage applied to the pulses, a desired voltage can be applied to the electroluminiscent panel and a desired luminance can be obtained by appropriately setting the resistance and the inductance of the coil as well as the duty factor of the driving pulse. By fitting the frequency of the driving pulse supplied from the driving pulse generation circuit to the resonant frequency determined by the capacitance of the electroluminiscent panel and the inductance of the coil, the electroluminiscent panel can be caused to emit light in a highly efficient manner.

Because an autotransformer is driven using a single drive circuit in the present invention, the entire winding of the autotransformer is constantly in use, and as a result, the autotransformer can be made smaller in size and the power supply circuit can be made smaller. In particular, the number of turns in the transformer can be cut in half as compared with the system under which the autotransformer is driven by using a push-pull circuit.

Furthermore, in the case of a power supply circuit of the self-excitation type, even if the capacitance of the electroluminiscent panel serving as the load deteriorates with time and becomes lower, luminance compensation can be performed. In particular, luminance compensation can be done automatically without detecting the state of the load by providing a duty conversion circuit.

The invention will now be described with reference to Figures 1 to 5, in which:
Figure 1 is a circuit diagram showing an application example of the separate excitation type of power supply circuit based on the present invention;
Figure 2 is a block diagram showing an application example of the self-excitation type of the power supply circuit based on the present invention ;
Figure 3 is a circuit diagram showing a detailed construction of the circuit shown in Figure 2;
Figure 4 is a waveform diagram explaining the duty control of the duty conversion circuit ; and
Figure 5 is a circuit diagram showing an example of a modification of the power supply circuit based on the present invention.

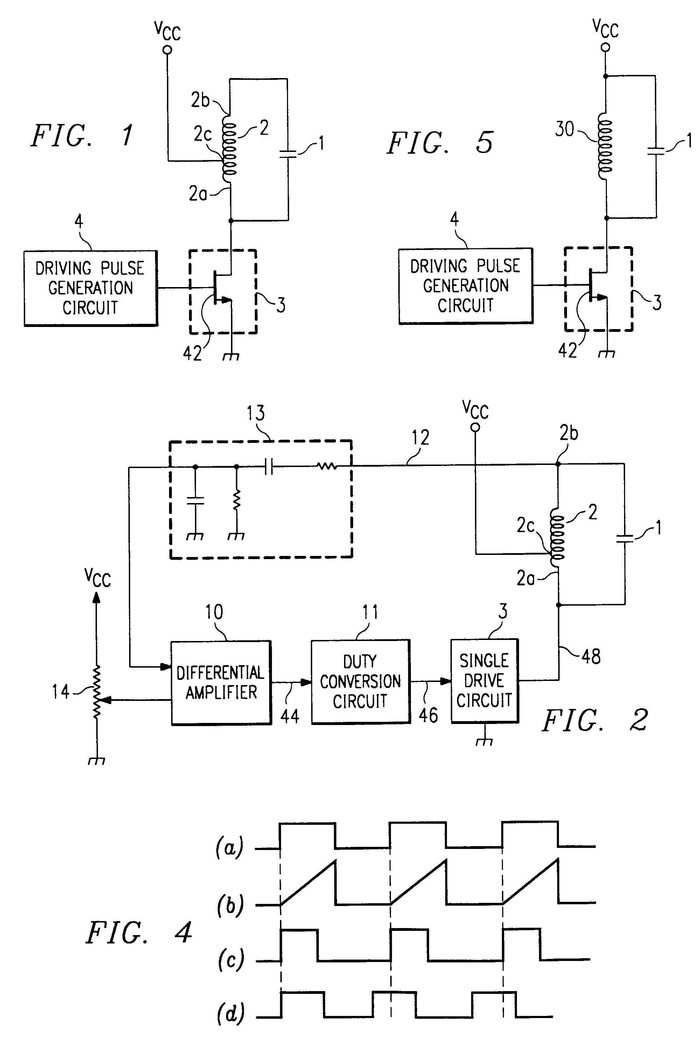

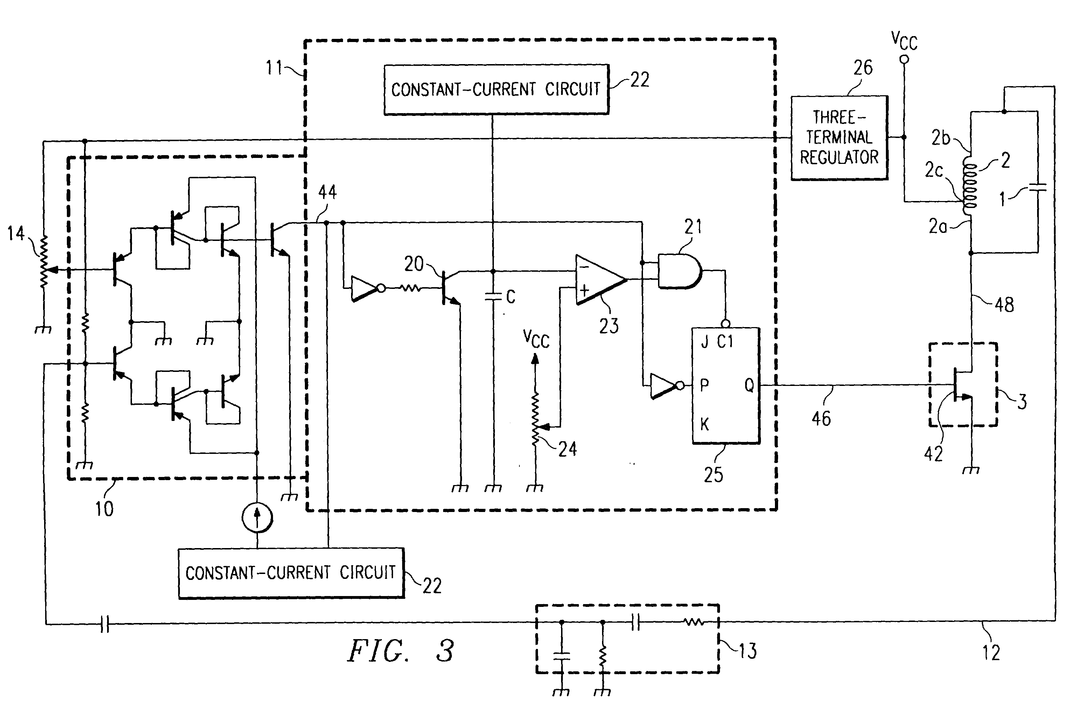

Figure 1 is a circuit diagram showing an example of a power supply circuit based on the present invention. In the present example, explanations are provided about a separate excitation type power supply circuit that uses an electroluminiscent panel as a capacitive load. An electroluminiscent panel (1) is connected between the two terminals (2a,2b) of an autotransformer (2). A center tap (2c) of autotransformer (2) is connected to a power supply terminal Vcc, which is connected to the cathode of a direct-current power supply. One of the terminals (2a) of the autotransformer, is connected to the drain of a power MOSFET that forms a single drive circuit (3), with its source grounded. Also, the gate of the power MOSFET is connected to a driving pulse generation circuit (4). The frequency of the driving pulse generated by the driving pulse generation circuit (4) is made equal to the resonant frequency of the resonant circuit made up of autotransformer (2) and electroluminiscent panel (1). The power MOSFET is alternately put in an on state and then in an off state by the driving pulse supplied from driving pulse circuit (4), and, as a result, a sinusoidal alternating voltage is applied to electroluminiscent panel (1) by the driving current supplied to the autotransformer from power supply terminal Vcc. Here, the ratio of the number of turns between center tap (2c) and first terminal (2a) to the number of turns between center tap (2c) and second terminal (2b) of autotransformer (2) can be determined based on the capacitance and necessary amount of emission of the electroluminiscent panel, voltage applied, the voltage of the direct-current power supply and the like; for example, it can be set to 1:20.

When the voltage of DC voltage Vcc is set to 6 V, the capacitance of electroluminiscent panel (1) is set to 4000 pF, the inductance of autotransformer (2) is set to 112 mH, the ratio of the number of turns is set to 1:20, and the frequency of the driving pulse is set to 7.5 kHz, an alternating voltage of 150 V can be applied to the electroluminiscent panel in the power supply circuit shown in Figure 1.

The voltage of the alternating voltage applied to electroluminiscent panel (1) in the power supply circuit shown in Figure 1 can be adjusted by providing a duty adjustment circuit in driving pulse generation circuit (4) and changing the duty factor of the driving pulse supplied to single drive circuit (3).

Therefore, the voltage applied can be adjusted in accordance with the required emission of electroluminiscent panel (1) and the capacitance of the electroluminiscent panel.

Figure 2 is a block diagram showing the construction of an application example of the self-excitation power supply circuits based on the present invention. The power supply circuit in the present example is equipped with a differential amplifier (10), a duty conversion circuit (11), a single drive circuit (3), an autotransformer (2) and a positive feedback circuit (12). An output signal is supplied from differential amplifier (10) to duty conversion circuit (11). This duty conversion circuit (11) generates a driving signal that has a duty factor corresponding to the changes in the capacitance of the load, and this driving signal is supplied to single drive circuit (3). The output terminal of this single drive circuit (3) is connected to the first terminal (2a) of autotransformer (2). The center tap (2c) of this autotransformer (2) is connected to a positive power supply terminal Vcc, which is connected to the cathode of a direct-current power supply. An electroluminiscent panel (1), which is the load, is connected between the two terminals, (2a) and (2b) of autotransformer (2). Second terminal (2b) of autotransformer (2) is connected to an input terminal of differential amplifier (10) through positive feedback circuit (12). In the present example, a filter (13) is connected to this positive feedback circuit (12), however, this filter, which is intended for adjusting the Q of the resonant circuit made up of autotransformer (2) and electroluminiscent panel (1) serving as the load, is not essentially indispensable, and for this reason, it can be eliminated. Also, the other input terminal of differential amplifier (10) is connected to the tap of a potentiometer (14) connected in series with the direct-current power supply, so that the desired reference potential is applied thereto.

In the above-described self-excitation power supply circuit, autotransformer (2) and electroluminiscent panel (1) make up a parallel resonant circuit, and if we designate the inductance of autotransformer (2) as L and the capacitance of electroluminiscent panel (1) as C, then the resonant frequency f of this resonant circuit is expressed by f = (1/2)π(L^{.}C)^{½}. Here, capacitance C of electroluminiscent panel (1) changes with time, and therefore, when the peak-to-peak value of the alternating voltage is constant, luminance changes and decreases with time. However, in the present example, as is evident from the above-mentioned equation, when electroluminiscent panel (1) deteriorates and capacitance C decreases, frequency f of the alternating voltage becomes higher, and for this reason, this fulfills the function of luminance compensation resulting in the maintenance of a constant luminance of the electroluminiscent panel.

Figure 3 is a circuit diagram showing a detailed construction of an application example of the power supply circuit based on the present invention shown in Figure 2. In addition, because differential amplifier (10) is constructed in the usual manner, explanations regarding it were omitted. The output signal of differential amplifier (10) is supplied to duty conversion circuit (11). The input terminal of duty conversion circuit (11), along with being connected to the base of transistor (20) through branches of resistors and inductors, is connected to one of the input terminals of an AND gate (21). The emitter of transistor (20) is grounded, and its collector is connected to a node between a constant-current circuit (22) and a capacitor C, with this node connected to the inverting input of the differential amplifier. Differential amplifier (23) acts as a comparator, and its noninverting input is connected to a potentiometer (24), providing bias to a specified reference potential Vref. Therefore, the voltage between the two terminals of capacitor C becomes a signal with a triangular waveform that grows linearly in response to each input signal, and is compared with reference potential Vref of differential amplifier (23). Differential amplifier (23) outputs a signal only in the case in which the voltage between the two terminals of capacitor C is lower than the reference potential , and this output signal is supplied to AND gate (21). The output signal of the AND gate is then supplied to a JK flip-flop circuit (25). The signal supplied to this input terminal is further supplied to the P terminal of the JK flip-flop circuit through an inverter (26). The output signal of JK flip-flop circuit (25) becomes an output signal, whose duty is controlled in accordance with the changes in the capacitance of electroluminiscent panel (1) in the manner described below, and is supplied to the input terminal of single drive circuit (3).

Single drive circuit (3) is made up of a power MOSFET, with its gate connected to the signal output terminal of JK flip-flop circuit (25). The drain of the power MOSFET is connected to first terminal (2a) of autotransformer (2), and the source is grounded. Center tap (2c) of autotransformer (2) is connected to direct-current power supply Vcc, and electroluminiscent panel (1) is connected between first terminal (2a) and second terminal (2b).

In order to obtain a driving voltage of 5 V for differential amplifier (10) and duty conversion circuit (11), a three-terminal regulator (26) is connected to the direct-current power supply. Also, in order to obtain the reference potential applied to the negative input terminal of differential amplifier (10) , a potentiometer (14) is connected to the 5-V output terminal of this three-terminal regulator (26), with its tap connected to the negative input terminal of differential amplifier (10). Therefore, an optimal reference potential can be obtained by adjusting the position of the tap of this potentiometer (14).

By doing so, a sinusoidal alternating voltage with a peak-to-peak value of 150 V and a frequency of 7.5 kHz can be applied in the present application example to the electroluminiscent panel from a 6-V direct-current power supply.

Next, explanations are given with regard to the operation of the duty conversion circuit. Figure 4 shows the waveform of the signals in each part of the duty conversion circuit, Figure 4(a) showing the waveform of the input signal of the input terminal, Figure 4(b) showing the waveform of the voltage between the two terminals of capacitor C, Figure 4(c) showing the waveform of the output signal of the JK flip-flop circuit, and Figure 4(d) showing the waveform of the output signal of the JK flip-flop circuit in the state, in which the capacitance of electroluminiscent panel (1) has decreased and the resonant frequency has increased. As shown in Figure 4(a), a signal with a 50% duty factor is input in the input terminal of the duty converter. Then, because a constant current is supplied to capacitor C from constant-current circuit (22), the voltage between both of its terminals assumes the triangular waveform shown in Figure 4(b). Because the voltage between both terminals of capacitor C is compared with reference potential Vref in differential amplifier (23), an output signal with a pulse width, whose duty factor is 50% or less, for example, 40% or less, is output from the differential amplifier by appropriately selecting the reference potential. On the other hand, because the resonant frequency, which is determined by the inductance of the autotransformer and the capacitance of the electroluminiscent panel, is fed back through positive feedback circuit (12), when the resonant frequency becomes higher, the frequency of the signal supplied to duty conversion circuit (11) also becomes higher. On the other hand, because the pulse width of the signal from differential amplifier (10) is determined based on reference potential Vref of potentiometer (27), even if the resonant frequency changes, a constant pulse width is maintained. As a result, the duty factor of the driving signal for single drive circuit (3) becomes higher to the same extent, and the luminance of the electroluminiscent panel can be automatically compensated.

Figure 5 shows another application example of the power supply circuit based on the present invention. In the present example, a coil (30), which has no center tap, is used instead of the autotransformer. Then, an electroluminiscent panel (1) is connected between second terminal (30b) and first terminal (30a) of coil (30), with first terminal (30a) connected to a direct-current power supply Vcc and second terminal (30b) connected to the drain of the power MOSFET of a single drive circuit (3). The frequency of the driving pulse supplied from a driving pulse generation circuit (4) is set so that it is equal to the resonant frequency determined by the capacitor of electroluminiscent panel (1) and inductance of coil (30). If such a construction is adopted, then the energy that is stored in coil (30) during the period when the driving pulse is in the on state, is discharged while it is off, and a sinusoidal voltage is applied to the electroluminiscent panel. Then, an appropriate voltage can be applied to the electroluminiscent panel, and, therefore, the desired luminance can be obtained, by appropriately setting the resistance and the inductance of coil (30), as well as the duty factor of the driving pulse.

The present invention is not limited to the above-described application examples, and various transformations and modifications thereof are possible. For example, a duty conversion circuit was placed between the differential amplifier and the single drive circuit in the self-excitation power supply circuit shown in Figures 2 and 3, but this duty conversion circuit is not totally indispensable, and can be eliminated.

Also, the single drive circuit is not limited to power MOSFETs, and various switching elements that allow current to flow in one direction can be used.

### Effects of the invention

As explained above, because an autotransformer is driven using a single drive circuit in the present invention, the entire winding of the autotransformer is constantly in use, and as a result, the autotransformer can be made smaller in size and the power supply circuit can be made smaller. In particular, the number of turns in the transformer can be cut in half as compared with the system under which the autotransformer is driven by using a push-pull circuit.

Furthermore, in the case of a power supply circuit of the self-excitation type, even if the capacitance of the electroluminiscent panel serving as the load deteriorates with time and becomes lower, luminance compensation can be performed. In particular, luminance compensation can be done automatically without detecting the state of the load by providing a duty conversion circuit.

## Claims

1. A power supply circuit characterized in that it has a power supply terminal connected to a direct-current power supply; an autotransformer that has a first and second terminal, as well as a center tap positioned between these first and second terminals, with the center tap connected to the above-mentioned power supply terminal and a capacitive load connected between the first and second terminals; a driving pulse generation circuit that generates a driving pulse with a frequency that is equal to the resonant frequency determined by the capacitance of the above-mentioned capacitive load and the inductance of the autotransformer; and a single drive circuit having a switching element, whose output terminal is connected to the first or second terminal of the above-mentioned autotransformer and which alternately performs the on/off operation based on the driving pulse supplied from the above-mentioned driving pulse generation circuit.

2. The power supply circuit described in Claim 1, characterized in that it is constructed such that a means is provided, which changes the duty factor of the driving pulse output so that it is possible to adjust the alternating voltage applied to the above-mentioned capacitive load.

3. The power supply circuit described in Claim 1 or 2, characterized in that the above-mentioned switching element is constructed using a power MOS transistor.

4. A power supply circuit characterized in that it is equipped with a power supply terminal that is connected to a direct-current power supply; a differential amplifier that has a first and second input terminal, as well as an output terminal; a means for applying a reference potential to the second input terminal of this differential amplifier; a single drive circuit having a switching element that is driven by the output signal of the above-mentioned differential amplifier and alternately performs the on/off operation; an autotransformer that has a first and second terminal, as well as a center tap placed between these first and second terminals, with the center tap connected to the above-mentioned direct-current power supply, the first terminal connected to the output terminal of the above-mentioned single drive circuit and a capacitive load connected between the first and second terminals; and a positive feedback circuit that links the second terminal of this autotransformer to the first input terminal of the above-mentioned differential amplifier.

5. The power supply circuit described in Claim 4, characterized in that a duty factor conversion circuit, which automatically changes the duty factor of the driving signal for the above-mentioned single drive circuit in accordance with the resonant frequency determined by the inductance of the above-mentioned autotransformer and the capacitance of the capacitive load, is connected between the above-mentioned differential amplifier and single drive circuit.

6. A power supply circuit characterized in that it has a power supply terminal that is connected to a direct-current power supply; a coil that has a first and second terminal, with the first terminal connected to the above-mentioned power supply terminal and an electroluminiscent panel connected between the first and second terminals; a driving pulse generation circuit that generates a driving pulse with a frequency that is equal to the resonant frequency determined by the capacitance of the electroluminiscent panel and inductance of the coil; and a single drive circuit having a switching element that alternately performs the on/off operation based on the driving pulse supplied from the above-mentioned driving pulse generation circuit.
